# NEUE EUROPÄISCHE PATENTSCHRIFT

(11) **EP 3 119 551 B2**
(45) Veröffentlichungstag und Bekanntmachung des Hinweises auf die Entscheidung über den Einspruch: **18.02.2026**
(45) Hinweis auf die Patenterteilung: 28.08.2019
(21) Anmeldenummer: 15716424.5
(22) Anmeldetag: 19.03.2015
(51) Int. Cl.: B23K 15/00, B23K 15/02, B23K 15/08, B23K 15/10

(54) **VERFAHREN ZUM ERZEUGEN KLEINER BOHRUNGEN IN WERKSTÜCKEN DURCH ÄNDERUNG EINES ARBEITSPARAMETERS INNERHALB EINES STRAHLIMPULSES**
METHOD FOR PRODUCING SMALL BORES IN WORK PIECES BY CHANGING AN OPERATING PARAMETER WITHIN A BEAM PULSE
PROCÉDÉ POUR RÉALISER DE PETITS ALÉSAGES DANS DES PIÈCES PAR MODIFICATION D'UN PARAMÈTRE D'USINAGE AU COURS D'UNE IMPULSION DE FAISCEAU

(30) Priorität: 21.03.2014 DE 102014004035
(43) Veröffentlichungstag der Anmeldung: 25.01.2017
(73) Patentinhaber: pro-beam GmbH & Co. KGaA, 82205 Gilching (DE)
(72) Erfinder: HOFNER, Michael, 82110 Germering (DE); JÜRGENS, Sven, 63589 Linsengericht/Grossenhausen (DE)
(74) Vertreter: Ostertag & Partner Patentanwälte mbB
(86) Internationale Anmeldenummer: PCT/EP2015/000600
(87) Internationale Veröffentlichungsnummer: WO 2015/139840

(56) Entgegenhaltungen:
- GB-A- 1 323 930
- US-A- 3 179 542
- US-A- 3 632 398

## Beschreibung

Die Erfindung betrifft ein Verfahren zum Erzeugen von kleinen Bohrungen in Werkstücken unter Verwendung eines Elektronenstrahles gemäß dem Oberbegriff des Anspruchs 1 (siehe, z.B., US 3 179 542).

Richtet man einen Elektronenstrahl auf ein insbesondere metallisches Werkstück, so trägt der Elektronenstrahl sehr konzentriert Energie in das Material ein, wodurch dieses aufgeschmolzen wird. Dabei kann auch Material verdampfen, so dass sich im Material eine Vertiefung ergibt, die kleine transversale Abmessungen aufweist und umso tiefer in das Material hineinreicht, je länger dieses vom Elektronenstrahl an der betreffenden Stelle bestrahlt wurde.

Man kann die Effektivität des Bohrens dadurch erhöhen, dass man das geschmolzene Metall durch ein Gas aus dem Material heraustreibt, welches der Elektronenstrahl aus einer Unterlage erzeugt, die hinter dem Werkstück angeordnet ist.

Ein solches Verfahren ist Gegenstand des Anspruches 1.

Aus der US 3,632,398 A ist ferner ein Elektronenstrahlbohrverfahren bekannt, bei welchem das eigentliche Werkstück auf einer Unterlage eines Hilfsmaterials angeordnet ist. Beim Austreten des Elektronenstrahls aus dem Werkstück wird dabei das Hilfsmaterial derart verflüssigt bzw. verdampft, dass es durch die Bohrung des Werkstück austritt und dabei die Innnenseite der Bohrung beschichtet. Unter anderem ist dabei vorgesehen, dass die Intensität des Elektronenstrahls beim Auftreffen auf die Unterlage aus Hilfsmaterial verändert wird.

Das Verfahren zum Erzeugen von kleinen Bohrungen in Werkstücken unter Verwendung eines Elektronenstrahles gemäß der Erfindung ist im Anspruch 1 definiert.

Dies ist auch im Hinblick darauf von Vorteil, dass die Bearbeitung innerhalb möglichst kurzer Zeit durchführbar ist. Dadurch kann auch gewährleistet werden, dass abgesehen von den gewünscht geänderten Parametern die übrigen Arbeitsbedingungen gleich bleiben. Auf diese Weise ist die Auswirkung der Änderung gut vorhersehbar.

Den angegebenen Varianten ist gemäß der Erfindung gemeinsam, dass sie die Art und Weise des Energieeintrages variieren und durch diese Variation ein entsprechend unterschiedliches Aufschmelzen von Material und damit eine unterschiedliche Geometrie der Bohrung ermöglichen.

Unter Kontur soll hierbei die Erzeugende verstanden werden, die bei Rotation um die Strahlachse die Wand der Bohrung ergibt. Anders gesagt ist die Kontur die Linie, die in axialer Schnittansicht des Bohrloches die Wand der Bohrung darstellt. Konturen können insbesondere schräg zur Strahlachse verlaufende Linien sein, die einer kegelförmigen oder kegelstumpfförmigen Bohrung entsprechen, oder konvexe oder konkave Linien sein, die aufgebauchten Bohrungen oder Taillen aufweisenden Bohrungen entsprechen.

Unter Form soll hierbei die Form des transversalen Querschnittes der Bohrung verstanden werden.

Die Unteransprüche betreffen vorteilhafte Weiterbildungen eines solchen Verfahrens.

Die Weiterbildung der Erfindung gemäß Anspruch 2 erlaubt ein noch feineres Einstellen der Abweichung der Bohrungswand von einer Zylinderform.

Dem gleichen Ziel dienen die Verfahren nach den Ansprüchen 3 und 4.

Dabei ist die Weiterbildung der Erfindung gemäß Anspruch 5 im Hinblick auf eine kurze Bearbeitungszeit zur Herstellung einer Bohrung bei guter Wandqualität von Vorteil.

Die Weiterbildung der Erfindung gemäß Anspruch 6 kann im Hinblick auf besonders effektives und rasches Ausblasen gerschmolzenen Metalles aus dem Bohrloch von Vorteil sein.

Die Weiterbildung gemäß Anspruch 7 ist im Hinblick auf besonders gute Oberflächenqualität der Bohrungswand von Vorteil.

Mit der Weiterbildung der Erfindung gemäß Anspruch 8 wird erreicht, dass konturierte Bohrungen auch in dickeren Materialien erzeugt werden können.

Die Weiterbildung der Erfindung gemäß Anspruch 9 ist wieder im Hinblick auf ein gutes Entfernen flüssigen Materiales aus dem Bohrloch von Vorteil.

Die Weiterbildung der Erfindung gemäß Anspruch 10 ist im Hinblick auf erhöhte Variabilität der Erzeugung einer Bohrung von Vorteil. So könnte man die Eigenschaften der aufeinander folgenden Strahlimpulse stärker unterschiedlich wählen als im Verlauf eines Impulses möglich, um stärker unterschiedliche gewünschte Eigenschaften von Bohrungsabschnitten zu erhalten.

Die Weiterbildung der Erfindung gemäß Anspruch 11 ist im Hinblick auf gute Oberflächenqualität der Bohrlochwand von Vorteil.

Das Verfahren gemäß Anspruch 12 erlaubt es zum einen für die Führung des Elektronenstrahles Techniken zu verwenden, wie sie vom digitalen Zeichnen her geläufig sind. Darüber hinaus kann man durch inkrementweises Weiterbewegen des Elektronenstrahles die Verweilzeiten des Eletronenstrahles an einer vorgegebenen Stelle auf einfache Weise ändern, indem man die Ablenkung zum nächstem Bahnpunkt hinausschiebt bzw. verkürzt.

Die Weiterbildung der Erfindung gemäß Anspruch 13 ist im Hinblick auf die Nutzbarmachung von Prozeduren, die beim digitalen Zeichnen verwendet werden, von Vorteil. Hier können Kurven, die sich geometrisch ähnlich sind, jedoch nur im Maßstab unterscheiden, auf sehr einfache Weise voneinander abgeleitet werden. Die angegebene Abstimmung des Abstandes der verschiedenen Bahnen zum Strahldurchmesser sind im Hinblick auf ein ausreichendes Aufschmelzen des Materiales des Werkstückes unter Vermeidung unnötiger Überführung dieses Materiales in die Gasphase von Vorteil.

Das Verfahren gemäß Anspruch 14 reduziert die Gefahr thermisch bedingter innerer Spannungen in der Umgebung der Bohrung.

Nachstehend wird die Erfindung anhand von Ausführungsbeispielen unter Bezugnahme auf die Zeichnung näher erläutert. In dieser zeigen:
- Figur 1:: eine schematische Darstellung einer Elektronenstrahlmaschine sowie der zu ihrem Betreiben notwendigen Elektronik;
- Figur 2:: schematisch verschiedene Phasen in der Erzeugung einer Bohrung mittels eines Elektronenstrahles; und
- Figur 3:: verschiedene Bahnkurven und Diagramme, die zur Erläuterung der Herstellung konturierter und unrunder Bohrungen verwendet werden.

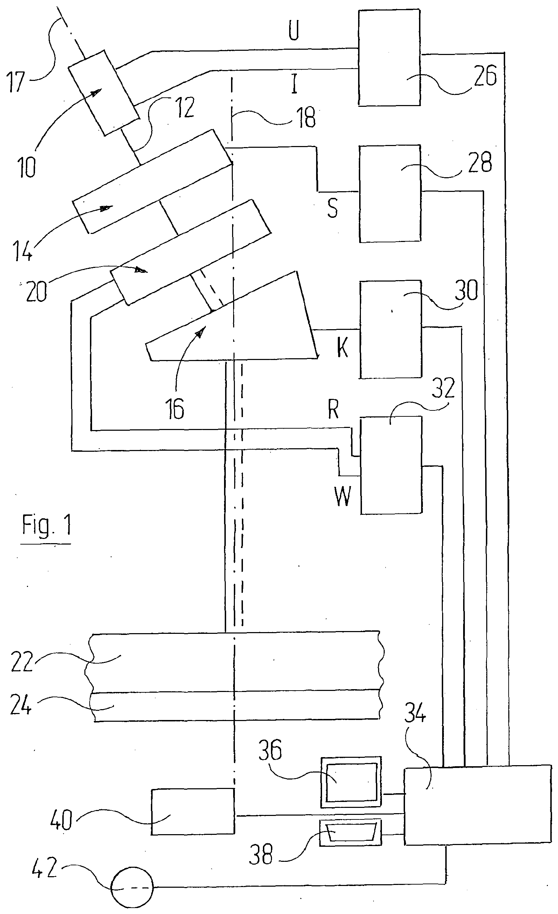

Die in Figur 1 gezeigte Elektronenstrahlmaschine hat eine insgesamt mit 10 bezeichnete Elektronenkanone, die einen Elektronenstrahl 12 erzeugt. Hinter der Elektronenkanone 10 ist eine Fokussiereinheit 14 vorgesehen, welche eine oder mehrere elektrostatische oder elektromagnetische Linsen umfassen kann.

Hinter der Fokussiereinheit 14 befindet sich im Strahlengang eine Ablenkeinheit 20, welche den Elektronenstrahl 12 im Wesentlichen parallel zur Achse 17 der Elektronenkanone 10 in zwei unabhängigen Koordinatenrichtungen versetzt. Für die Zwecke der vorliegenden Beschreibung wird angenommen, dass diese Versetzung durch Polarkoordinaten beschrieben werden kann, also den Radius R, unter dem der Elektronenstrahl 12 angetroffen wird und der Winkel W, der in einer senkrecht auf der Strahlrichtung zu denkenden Referenzebene gegenüber einer in der Referenzebene liegenden Referenzrichtung gemessen wird.

Hinter der Ablenkeinheit 20 ist eine Umlenkeinheit 16 vorgesehen, welche den Elektronenstrahl 12 auf eine Geräteachse 18 umlenkt.

Der Elektronenstrahl 12 trifft hinter der Umlenkeinheit 16 auf ein Werkstück 24 auf, hinter dem sich eine Unterlage 24 befindet.

Mit der Elektronenkanone 10 ist eine Kanonensteuereinheit 26 verbunden, welche die Beschleunigungsspannung U und den Strahlstrom I vorgibt und bereitstellt.

Für die Fokussiereinheit 14 ist eine Fokussteuereinheit 28 vorgesehen, welche ein die Fokuslage vorgebendes Signal S bereitstellt.

Eine Umlenk-Steuereinheit 30 stellt für die Umlenkeinheit 16 ein konstantes Signal K bereit, welches den Kippwinkel des Elektronenstrahles 12 in der Umlenkeinheit 16 vorgibt.

Mit der Ablenkeinheit 20 arbeitet eine Ablenksteuerung 32 zusammen, welche zwei unabhängige Steuersignale R und W bereitstellt, von denen das eine (R) den radialen Abstand des Elektronenstrahles 12 von der Kanonenachse 17 vorgibt und das andere (W) die Winkellage des Elektronenstrahles 12 in der senkrecht auf der Strahlrichtung stehenden Referenzebene bezüglich der in dieser Ebene liegenden Referenzrichtung vorgibt.

Die verschiedenen Steuereinheiten 26 bis 32 sind mit einer Hauptsteuerung 34 verbunden, welche das Arbeiten der Elektronenstrahlmaschine steuert. Das Arbeiten der Hauptsteuerung 34 kann an einem Bildschirm 36 kontrolliert werden und durch eine Tastatur 38 beeinflusst werden.

Ein Datenspeicher 40 kann Daten und Programme für unterschiedliche Bearbeitungen enthalten.

In der Zeichnung nicht näher dargestellte Fühler, wie der beispielhaft bei 42 gezeigte können mit der Hauptsteuerung 34 verbunden sein, um das Vakuum in der Elektronenstrahlmaschine und andere Betriebsparameter derselben zu messen. Auch sind an die Hauptsteuerung 34 nicht gezeigte weitere gesteuerte Lasten angeschlossen, die zum Betreiben der Elektronenstrahlenmaschine notwendig sind, z.B. Vakuumpumpen, Servomotoren zum Betätigen von Schleusen, Transporteinrichtungen für Werkstücke usw.

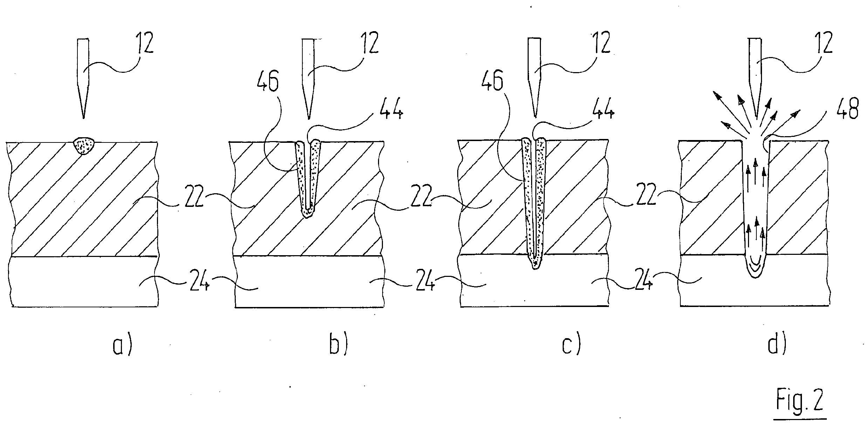

Figur 2 zeigt vier verschiedene Phasen der Erzeugung einer Bohrung.

Bei a) hat der Elektronenstrahl auf der Geräteachse einen ersten Materialbereich des Werkstückes 22 angeschmolzen.

Bei b) ist schon eine materialfreie Seele einer im Entstehen begriffenen Bohrung vorhanden, deren Randbereich noch durch eine hohle geschmolzene Metallschicht 46 gebildet wird, die schlanke kegelförmige Gestalt hat.

Bei c) hat der Elektronenstrahl 12 das Material des Werkstückes 22 bis zur Rückseite durchgeschmolzen und den obersten Bereich der Unterlage 24 erreicht.

Da die Unterlage 24 aus einem Material gefertigt ist, welches durch den Elektronenstrahl leicht verdampfbar ist, z.B. ein bei niederen Temperaturen verdampfendes Metall, entsteht nun eine größere Menge Metalldampf, welche die flüssige Metallschicht 46 ausbläst, wie bei d) gezeigt.

Als Material für die Unterlage 24 kommen insbesondere in Frage: Kunststoffe, insbesondere Epoxid-Harze, Silikonverbindungen, Gips oder kristalline Materialien, welche Kristallwasser enthalten, Messing, Lackschichten, Folien oder Platten, welche einen Festkörper-Füllstoff aus Partikeln der vorgenannten Materialien umfassen, sowie Mischungen der vorgenannten Materialien.

Besonders bevorzugt sind Silikonplatten mit einer Dicke von einigen mm mit einem hohen Füllstoffanteil an Quarzmehl.

Die Unterlage wird typischerweise in Form einer 2-3 mm dicken Platte, die durch ein Luftkissen (nicht gezeigt) in Anlage an der Unterseite des Werkstückes 22 gehalten wird. Die Dicke der Unterlage 22 ist so bemessen, dass sie beim Bearbeitungsvorgang nur zu einem Bruchteil vom Elektronenstrahl durchquert werden kann, wozu dessen Länge nur um eine sehr kleine Zeitspanne länger gewählt ist als die Zeit, die vom Elektronenstrahl zum Erreichen der Unterlage benötigt wird.

Es ist wichtig, dass die Unterlage 24 einen guten flächigen Formschluss zur Rückseite des Werkstückes 22 hat.

Das so fertiggestellte Bohrloch ist bei d) mit 48 bezeichnet.

In Figur 2 erkennt man bei d) die Kontur der Bohrung, also die Schnittlinie seiner Umfangsfläche mit der Zeichenebene. Von der Kontur zu unterscheiden ist, wie gesagt, der Querschnitt bzw. die Form, worunter hier die Gestalt eines transversalen Schnittes durch das Bohrloch 48 verstanden wird. Typischerweise hat das Bohrloch 48, welches in Figur 2 gezeigt ist, im Wesentlichen kreisrunden Querschnitt.

Bei dem Erzeugen der Bohrung gemäß Figur 2 steht der Elektronenstrahl 12 von der Phase a) bis zur Phase b) exakt auf der Geräteachse.

Der Elektronenstrahl 12 wird in Form von Strahlimpulsen erzeugt, die unter zeitlichem Abstand regelmäßig aufeinander folgen. Die in Figur 2 gezeigten Phasen a) bis d) werden durch einen einzigen Impuls des Elektronenstrahles durchlaufen, der in seiner Stärke und Dauer gerade so bemessen ist, dass er zum Bohren der Bohrung 48 ausreicht.

Die Konturierung und der Querschnitt einer so erzeugten Bohrung sind beeinflussbar über
a) die Geometrie des Elektronenstrahles 12 (Querschnitt und Kaustik),
b) den Strahlstrom,
c) die Länge des Strahlimpulses,
d) die Geometrie der Bahn, längs der der Elektronenstrahl über das Werkstück 22 bewegt wird,
e) die Geschwindigkeit, mit der der Elektroenstrahl 12 über das Werkstück geführt wird,
f) die Materialeigenschaften des Werkstückes 22,
g) sowie in geringerem Umfange (bei den hier gerade betrachteten Bedingungen) von den Materialeigenschaften der Unterlage 24.

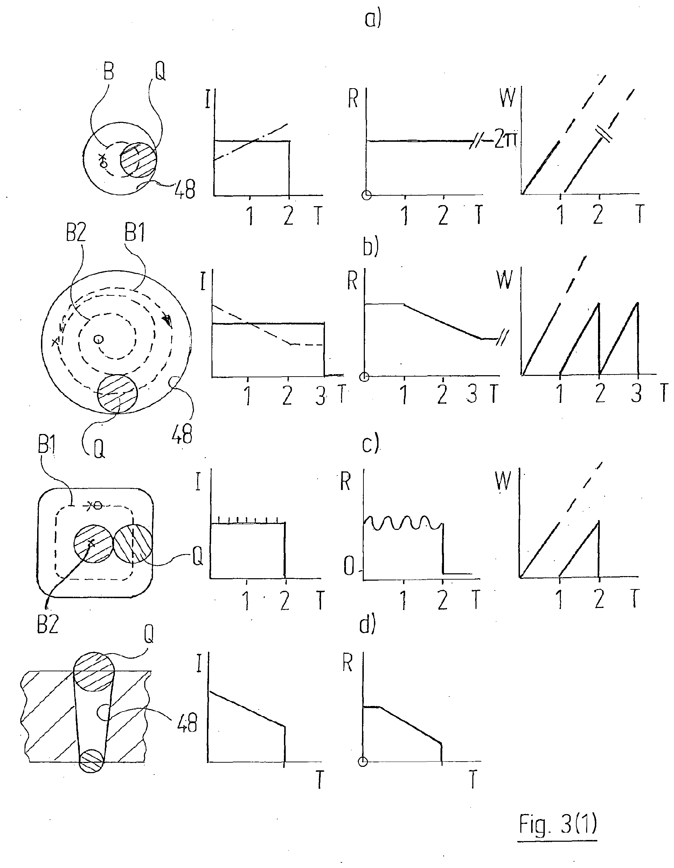

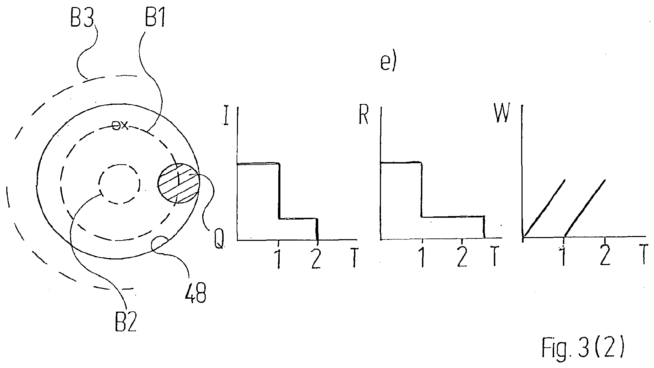

Nunmehr wird auf Figur 3 Bezug genommen, welche das Erzeugen von Bohrungen unterschiedlicher Geometrie in einem Werkstück durch Führung des Elektronenstrahles auf unterschiedlichen Bahnen über das Werkstück hinweg auch unter Abänderung von Arbeitsparametern der Elektronenstrahlmaschine darstellen.

In diese Figur sind durchgehend B, B1 und B2 Bahnen, die der Elektronenstrahl 12 auf der Werkstückoberfläche um die Geräteaches 18 ausführt, Q der Strahlquerschnitt bzw. D der Strahldurchmesser, I der Strahlstrom, R der Radius der Bahn, W der Winkel zum betrachteten Bahnpunkt und 48 die Bohrung.

Wünscht man Bohrungen, die eine andere Konturierung oder einen anderen Querschnitt aufweisen, wird der Elektronenstrahl 12 in seiner Geometrie und/oder einem oder mehreren anderen Arbeitsparametern geändert und/oder auf einer von der Geräteachse 18 beabstandeten Bahn B geführt.

Links in der Reihe (a) von Figur 3 ist eine kreisförmige Bahn B dargestellt.

Der Strahlstrom I wird über zwei Umläufe (zwei Perioden) des Strahlumlaufes aufrecht erhalten. Innerhalb dieser zwei Umläufe ist das Material des Werkstückes gerade voll durchgeschmolzen. Die Größe des Strahlstromes ist so bemessen, dass das Material innerhalb des Kreises und eine querschnittsmäßig symmetrische Materialmenge auf der Außenseite der Kreisbahn B aufgeschmolzen werden.

In Abwandlung kann man den Strahlstrom auch verkleinern oder vergrößern, wie gestrichelt angedeutet.

Nach Ausblasen der Schmelze erhält man so ein Bohrloch mit einer leichten Schräge, wie sie sich aus der Tatsache ergibt, dass das Material auf der Eintrittsseite des Elektronenstrahles länger erwärmt wird als bei der Austrittstelle des Elektronenstrahles in das Substrat.

In der zweiten und dritten Darstellung der Reihe (a) von Figur 3 sind die Variation des Abstandes R und des Winkels W über der Zeit T aufgetragen, wobei die Zeiteinheit einem Umlauf des Strahles entspricht.

Man sieht aus der mittleren Darstellung von (a), dass man das Signal R, das den Radius einstellt, auch über die Impulszeit hinaus anhalten lassen kann. Ähnliches gilt für die letzte Darstellung der Reihe (a), da das Winkelsignal W kontinuierlich weiterlaufen kann, so dass auch hier keine steilen Signalflanken erzeugt werden müssen. Die Darstellung in ausgezogenen Linien entspricht nur der üblichen Darstellung periodischer Vorgänge, bei denen man Vielfache von 2n abzieht, um den Platzbedarf der Darstellung klein zu halten.

Beim soeben beschriebenen Ausführungsbeispiel war der Radius des Kreises, auf welchem der Elektronenstrahl 12 bewegt wurde, gleich dem halben Strahldurchmesser. In Abwandlung kann man den Elektronenstrahl auch auf Kreisbahnen führen, deren Durchmesser kleiner ist, z.B. 10 bis 50% des Strahldurchmessers beträgt. Man erhält dann kleinere Löcher, deren Umfangswand ebenfalls schräg geneigt verläuft.

In der Reihe (b) von Figur 3 sind die entsprechenden Verhältnisse für die Erzeugung einer Bohrung mit vergrößerter Konizität dargestellt. Der Elektronenstrahl 12 startet an einem Punkt, der mit einem kleinen Kreuz gekennzeichnet ist und endet an einem Punkt, der durch einen kleinen Kreis gekennzeichnet ist.

Der Elektronenstrahl 12 wird zunächst über 360° auf einer ersten kreisförmigen Bahn B1 geführt, auf der er das Werkstück auf eine erste Tiefe aufschmilz, die etwa 1/3 der Dicke des Werkstückes 22 beträgt.

Bei einem zweiten und dritten Umlauf nimmt der Radius r kontinuerlich ab, wie sich aus der dritten Darstellung der Reihe (b) ergibt. Die Schnittiefe nimmt dabei so zu, dass bei Ende des dritten Umlaufes die Oberseite der Unterlage 24 erreicht wird.

Die Winkeldarstellung entspricht der der Reihe (a).

Man erkennt, dass man auf diese Weise beginnend von der Oberfläche eine Bohrung erzeugen kann, die größere Konizität hat als der Konizität entspricht, welche durch Strahlgeometrie und thermische Effekte vorgegeben ist. Man arbeitet dabei so, dass der Strahl innerhalb zweier Umlaufzeiten nach innen läuft.

Das doppelte oder auch häufigere Vorbeibewegen des Elektronenstrahles am ersten, oberen Teil der Bohrungswand stellt auch sicher, dass deren Oberflächenbeschaffenheit gut ist.

In Abwandlung des Ausführungsbeispieles (b) von Figur 3 kann man auch die Stärke des Elektronenstrahles variieren in dem Sinne, dass die Stromstärke mit der Zeit abnimmt (gestrichelt eingezeichnet). Auch dies wirkt in Richtung auf eine Vergrößerung der Konizität.

In Abwandlung des Beispieles (a) von Figur 3 kann man die Stromstärke ansteigen oder abnehmen lassen, und so die Konizität der Bohrung erhöhen oder reduzieren, wie gestrichelt angedeutet.

Die Reihe (c) von Figur 3 zeigt die Verhältnisse beim Erzeugen einer im Wesentlichen quadratischen Öffnung. Bei konstanter Winkelgeschwindigkeit (4. Diagramm) muss der Ablenkstrom so moduliert werden, dass der Strahl unter wachsendem Abstand in eine Ecke hinein und unter abnehmendem Abstand R von einer Ecke zurückbewegt wird. Man kann dies z.B. annähernd durch eine sinusförmige Modulation erreichen, wie sie in der dritten Darstellung der Reihe (c) von Figur 3 angegeben ist.

Durch die Führung längs einer im Wesentlichen quadratischen Bahn B1 ändert sich bei vorgegebener Winkelgeschwindigkeit W die Intensität des Elektronenstrahles pro Bahnstück. Um dies auszugleichen, kann man den Strom in denjenigen Bereichen der Bahn, in denen eine Ecke des Quadrates ausgefahren wird, kurzfristig erhöhen, wie schematisch in der zweiten Darstellung der Reihe (c) dargestellt. Der Einfachheit halber sind scharfe aufgesetzte Peaks P dargestellt, welche in der Praxis verschmierte Kurven sein können, die einer Glockenkurve ähnlich sind.

Nach einem Umlauf auf der Bahn B1 wird der Elektronenstrahl 12 so lange auf die Geräteachse gestellt, dass dort das Material genauso weit aufgeschmolzen wird, wie längs der Bahn B1. Dieses Stehen auf der Geräteachse kann man formal als zweite Bahn B2 ansehen. Die Gesamtzeit zum Durchfahren der Bahnen B1 und B2 ist eine Taktzeit T.

Wieder erfolgt die gesamte Erzeugung der Durchbrechung mit einem Impuls des Elektronenstrahles, der zwei Taktzeiten lang ist. Dies kann so erfolgen, dass die Tiefe der vom Strahl erzeugten Nut nach dem ersten Takt etwas weiter als bis zur Mitte des Werkstückes vorgedrungen ist und beim zweiten Umlauf dann vollends bis zur Oberseite des Substrates durchstößt.

Die Reihe (d) zeigt die Erzeugung einer kleinen Durchmesser aufweisenden Bohrung mit stärkerer Konizität. Hierzu lässt man den Elektronenstrahl 12 bleibend auf der Geräteachse 18 auf die Werkstückoberfläche fallen. Im Laufe der Einwirkung wird der Strahldurchmesser D verkleinert, wie aus der rechten Teilfigur der Reihe (d) ersichtlich. Gleichzeitig wird der Strahlstrom I verringert, wie aus der mittleren Figur ersichtlich. Zum Beginn der Bearbeitung kann der Strahldurchmesser D für eine bestimmte Zeit konstant gehalten werden, bevor er dann abnimmt, wie aus der dritten Teilfigur der d) ersichtlich. Die Breite des Plateaus in der Kurve D(T) gestattet es, die Konizität der Bohrung einzustellen. Die Querschnittsänderung des Elektronenstrahles kann z.B. über eine Defokussierung und Fokussierung des Elektronenstrahles erzeugt werden.

Weiter oben war unter Bezugnahme auf (b) von Figur 3 dargelegt worden, wie man Bohrungen erzeugen kann, deren Querschnitt größer ist als der Strahlquerschnitt.

Die Reihe (e) von Figur 3 zeigt eine weitere Möglichkeit der Erzeugung eines großen Bohrloches mit starker Konizität, bei der der Elektronenstrahl 12 auf zwei konzentrischen Kreisbahnen geführt wird. Zuerst auf einer äußeren Kreisbahn B1, danach auf einer inneren Kreisbahn B2.

Auch bei dieser Bahnbewegung wird das Material innerhalb des Bohrloches aufgeschlossen, und das flüssige Metall wird dann, wenn der Elektronenstrahl 12 die Oberseite der Unterlage 24 erreicht, durch das dann erzeugte Gas ausgetrieben.

Wie in der zweiten Teilfigur der Reihe (e) von Figur 3 dargestellt, wird der Strahlstrom für die innere Kreisbahn B2 reduziert. Die Reduktion erfolgt so, dass die Strahlenergie, besser die Strahlleistung, die pro Wegeinheit für das Aufschmelzen von Metall zur Verfügung steht (Streckenenerige), auf allen Bahnabschnitten gleich ist.

Ein solches Arbeiten mit konstanter Streckenenergie ist in der Regel für die Erzeugung von Bohrlöchern bevorzugt.

Dabei kann man auch berücksichtigen, dass bei gebogenen Abschnitten der Strahlführungsbahn, die Materialbereiche, die auf der konkaven Seite der Strahlbahn liegen bzw. von dieser umgeben werden, mehr aufgewärmt werden, als die Materialbereiche auf der konvexen Seite der Strahlführungsbahn.

In der Regel wird es einfacher sein die konstante Streckenenergie über eine Regelung der Strahlgeshcwindigkeit einzustellen als über den Strahlstrom.

Für manche Anwendungen kann es vorteilhaft sein, mit nicht konstanter Streckenergie zu arbeiten, um z.B. in bestimmten Abschnitten der Strahlführungsbahn vermehrt Material des Werkstückes zu verdampfen.

Man kann auch die Streckenleistung im Laufe des Bearbeitungsweges variieren, um z.B. bei auszufahrenden Ecken die Bahnkurven einfach zu halten und trotzdem das Material lokal stärker aufzuschmelzen, was eine Ausbauchung des Bohrloches ergibt. Ein solches Verfahren könnte man z.B. bei der Erzeugung eines Loches gemäß Reihe (c) von Figur 3 verwenden, um trotz einer Führung des Elektronenstrahles auf einer Kreisbahn die vier Ecken des an sich gewünschten Quadrates herauszuarbeiten.

Bei den oben beschriebenen Ausführungsbeispielen wurde durchweg mit einer solchen Anpassung zwischen Bahngeschwindigkeit des Elektronenstrahles und Länge des Strahlimpulses gearbeitet, dass das Werkstück 22 in zwei oder drei Umläufen des Elektronenstrahles fertig bearbeitet war.

Es versteht sich, dass man auch mit einem Umlauf oder mit mehr als drei Umläufen arbeiten kann.

Generell gilt, dass beim Erzeugen einer Bohrung mit nur einem Umlauf des Elektronenstrahles eine Bohrungswand erhalten wird, deren Oberflächenqualität nicht gleichförmig ist. Bei zwei Umläufen hat man schon eine deutlich bessere Oberflächenqualität, und bei höheren Ansprüchen an die Oberflächenqualität der Bohrungswand kann man auch mit zwei bis zehn Umläufen eine Bohrung erzeugen.

Bei einer größeren Anzahl von Umläufen stellt sich dann bei Werkstücken, die nur durchschnittlichen Anforderungen zu genügen haben, die Frage, dass der Zuwachs an Bearbeitungszeit und Bearbeitungskosten und die Verbesserung der Oberflächenqualität der Bohrlochwand nicht mehr in einem guten Verhältnis stehen. Für hochwertige Werkstücke, bei denen die Qualität der Bohrungswand die wichtigste Rolle spielt, kann man durchaus aber auch mit umd die 10, um die 20 oder bis hin zu 50 Umläufen arbeiten. In diesem Falle kann man dann die Strahlleistung für diejenigen Umläufe, bei denen keine wesentlichen Materialmengen mehr abgebaut werden und die eher der Glättung der Bohrungswand dienen, die Strahlleistung herabsetzen.

Bei den vorstehend beschriebenen Ausführungsbeispielen wurde der Strahl dann ganz abgeschaltet, wenn die Bohrung fertig erzeugt war. In manchen Fällen, in denen es darauf ankommt, dass im Material um die Bohrung herum keine größere Spannungen aufgebaut werden, die später zu einem Materialbruch führen könnten, kann es vorteilhaft sein, den Elektronenstrahl noch einen oder mehrere Umläufe über die dem Bohrloch benachbarten Bereiche des Werkstückes durchführen zu lassen, um dort das Absinken der Temperatur zu verlangsamen.

Derartige Temper-Zyklen werden mit verminderter Strahlleistung durchgeführt, so dass kein nennenswerter weiterer Materialabtrag vom Werkstück erfolgt. Eine entsprechende Temperierbahn ist in Reihe (e) von Figur 3 bei B3 über 180° dargestellt. Für eine solche Temperierung wird der Strahlstrom verkleinert und/oder die Strahlgeschwindigkeit erhöht und/oder der Strahlquerschnitt vergrößert.

Nachstehend werden beispielhaft noch einige Zahlenbeispiele für Arbeitsparameter gegeben:
- Dicke des Werkstückes 0,8 mm bis 4 mm
- Beschleunigungsspannung 120 kV
- Länge des Strahlimpulses 1µs bis 1 ms
- Strahldurchmesser >40 µm
- Material der Unterlage: 2 bis 3 mm dicke Platte aus Silikonmasse mit 80 bis 90 % Füllstoffpartikeln aus Gips und/oder Messing
- Typischer Durchmesser erzeugter Bohrungen 80 µm bis 1200 µm

## Patentansprüche

1. Verfahren zum Erzeugen von kleinen Bohrungen (48) in Werkstücken (22) unter Verwendung eines Elektronenstrahles (12), bei dem
a) das Werkstück (22) auf eine Unterlage (24) gelegt wird, die bei Energiezufuhr ein Gas freisetzt; und
b) der Elektronenstrahl (12) so lange auf das Werkstück (22) gerichtet wird, bis er die Unterlage (24) erreicht;
**dadurch gekennzeichnet, dass**
c) mindestens ein Arbeitsparameter geändert wird, der aus der nachstehenden Parametergruppe ausgewählt ist: Strahldurchmesser, Strahlstrom, Strahlfokussierung, relative Ablage des Elektronenstrahles (12) von einer Geräteachse (18), Bahngeschwindigkeit des Elektronenstrahles (12) über dem Werkstück (22), Streckenergie;
wobei
d) die Änderung innerhalb eines Strahlimpulses derart erfolgt, dass die Art und Weise des Energieeintrags variiert, und dass durch diese Variation ein entsprechend unterschiedliches Aufschmelzen von Material des Werkstückes ermöglicht wird, so dass Bohrungen mit einer von einer Zylinderform abweichenden Bohrungswand erzeugt werden.

2. Verfahren nach Anspruch 1, **dadurch gekennzeichnet, dass** zwei oder mehrere Arbeitsparameter der Parametergruppe geändert werden.

3. Verfahren nach Anspruch 2, **dadurch gekennzeichnet, dass** mindestens zwei der geänderten Arbeitsparameter gleichzeitig geändert werden.

4. Verfahren nach Anspruch 2 oder 3, **dadurch gekennzeichnet, dass** mindestens zwei der geänderten Arbeitsparameter nacheinander geändert werden.

5. Verfahren nach einem der Ansprüche 1 bis 4, **dadurch gekennzeichnet, dass** die Bearbeitungszeit zwei oder mehr Bewegungszyklen des Elektronenstrahles (12) über das Werkstück (22) hinweg umfasst, vorzugsweise 2 bis 50 Bewegungszyklen, nochmal vorzugsweise 2 bis 20 Bewegungszyklen, nochmals vorzugsweise 2 bis 10 Bewegungszyklen.

6. Verfahren nach Anspruch 5, **dadurch gekennzeichnet, dass** in einem ersten Strahllauf das Werkstück (22) nur unvollständig über seine Dicke aufgeschmolzen wird und die Oberfläche der Unterlage in einem letzten Strahlumlauf erreicht wird, vorzugsweise gegen dessen Ende.

7. Verfahren nach Anspruch 5 oder 6, **dadurch gekennzeichnet, dass** in mindestens einem der letzten Zyklen, vorzugsweise der letzten fünf Zyklen, der Elektronenstrahl (12) in radialer Auswärtsrichtung um eine Strecke zugestellt wird, die einem kleinen Bruchteil des Strahldurchmessers entspricht, vorzugsweise etwa 2% bis etwa 5% des Strahldurchmessers.

8. Verfahren nach einem der Ansprüche 1 bis 7, **dadurch gekennzeichnet, dass** die Bohrung (48) mit zwei, drei, usw. aufeinanderfolgenden Strahlimpulsen erzeugt wird.

9. Verfahren nach Anspruch 8, **dadurch gekennzeichnet, dass** mit dem ersten Strahlimpuls das Werkstück bis in eine Tiefe aufgeschmolzen wird, die mindestens etwa die Hälfte, ein Drittel usw. der Werkstückdicke ist, wobei die Unterlage (24) aber noch nicht erreicht wird, und mit dem zweiten, dritten usw. Strahlimpuls das Durchschmelzen des verbleibenden Materialsteges bis zur Unterlage (24) erfolgt und die Wände des von ersten vorhergehenden Strahlimpulsen erzeugten Teiles des Bohrunges (48) überfahren werden.

10. Verfahren nach Anspruch 9 und Anspruch 1, **dadurch gekennzeichnet, dass** der zweite, dritte usw. Strahlimpuls sich durch einen seiner Parameter vom ersten Strahlimpuls unterscheidet, der aus der genannten Parametergruppe ausgesucht ist.

11. Verfahren nach Anspruch 10, **dadurch gekennzeichnet, dass** die Bewegungsgeschwindigkeit und die Bahn, auf welcher der Elektronenstrahl (12) zum Zwecke der Bearbeitung geführt wird, so aufeinander abgestimmt sind, dass zumindest ein Abschnitt der Bohrung bei der Erzeugung desselben zweimal überstrichen wird.

12. Verfahren nach einem der Ansprüche 1 bis 11, **dadurch gekennzeichnet, dass** die Bahn des Elektronenstrahles (2) inkrementweise durchlaufen wird.

13. Verfahren nach einem der Ansprüche 1 bis 12, **dadurch gekennzeichnet, dass** der Elektronenstrahl (12) nacheinander auf Bahnen geführt wird, deren Abstand in zur Bewegungsrichtung des Strahles senkrechter Richtung kleiner ist als der Strahldurchmesser, vorzugsweise 10 bis 40% desselben, nochmals vorzugsweise 15 bis 25% desselben beträgt.

14. Verfahren nach einem der Ansprüche 1 bis 13, **dadurch gekennzeichnet, dass** der Elektronenstrahl (12) nach Fertigstellung der Bohrung über den Rand des die Bohrung umgebenden Materiales geführt wird, vorzugsweise mit derart verminderter Energie, dass das Material des Werkstückes nicht geschmolzen und nicht verdampft wird.

## Claims

1. Method for producing small bores (48) in work pieces (22) by using an electron beam (12), in which
a) the work piece (22) is placed onto an underlay (24), which releases a gas when energy is supplied; and
b) the electron beam (12) is directed onto the work piece (22) until it reaches the underlay (24);
**characterized in that**
c) at least one operating parameter selected from the following group of parameters is changed: beam diameter, beam current, beam focusing, relative deviation of the electron beam (12) from an equipment axis (18), path velocity of the electron beam (12) over the work piece (22) and energy per unit length;
wherein
d) the change within a beam pulse is carried out such that the manner in which the energy is introduced varies and that, by this variation, a correspondingly different melting of material of the work piece is made possible, so that bores with a bore wall deviating from a cylinder shape are produced.

2. Method according to claim 1, **characterized in that** two or more operating parameters of the group of parameters are changed.

3. Method according to claim 2, **characterized in that** at least two of the changed operating parameters are changed at the same time.

4. Method according to claim 2 or 3, **characterized in that** at least two of the changed operating parameters are changed one after the other.

5. Method according to one of claims 1 to 4, **characterized in that** the machining time comprises two or more movement cycles of the electron beam (12) over the work piece (22), preferably 2 to 50 movement cycles, more preferably 2 to 20 movement cycles, more preferably 2 to 10 movement cycles.

6. Method according to claim 5, **characterized in that** in a first beam run the work piece (22) is only melted incompletely over its thickness and in a final circulation of the beam, preferably toward its end, the surface of the underlay is reached.

7. Method according to claim 5 or 6, **characterized in that**, in at least one of the last cycles, preferably the last five cycles, the electron beam (12) is advanced in the radial direction by a distance that corresponds to a small fraction of the beam diameter, preferably approximately 2% to approximately 5% of the beam diameter.

8. Method according to one of claims 1 to 7, **characterized in that** the bore (48) is produced by two, three, etc. successive beam pulses.

9. Method according to claim 8, **characterized in that**, with the first beam pulse, the work piece is melted to a depth that is at least approximately half, one third, etc. of the thickness of the work piece, wherein the underlay (24) is not yet reached, and, with the second, third, etc. beam pulse, the melting through of the remaining strip of material to the underlay (24) takes place and the walls of the part of the bore (48) produced by first preceding beam pulses are passed over.

10. Method according to claim 9 and claim 1, **characterized in that** the second, third, etc. beam pulse differs from the first beam pulse by one of its parameters selected from the stated group of parameters.

11. Method according to claim 10, **characterized in that** the movement velocity and the path on which the electron beam (12) is guided for the purpose of the machining are coordinated to one another such that at least one portion of the bore is passed over twice during the production of the same.

12. Method according to one of claims 1 to 11, **characterized in that** the path of the electron beam (2) is run through incrementally.

13. Method according to one of claims 1 to 12, **characterized in that** the electron beam (12) is guided successively on paths of which the spacing in the direction perpendicular to the direction of movement of the beam is smaller than the beam diameter, preferably 10 to 40% of the same, more preferably 15 to 25% of the same.

14. Method according to one of claims 1 to 13, **characterized in that**, after completion of the bore, the electron beam (12) is guided over the periphery of the material surrounding the bore, preferably with such reduced energy that the material of the work piece is not melted and not vaporized.

## Revendications

1. Procédé pour produire des petits alésages (48) dans des pièces (22) à l'aide d'un faisceau d'électrons (12), selon lequel
a) la pièce (22) est placée sur un support (24) qui libère un gaz lorsque de l'énergie est fournie ; et
b) le faisceau d'électrons (12) est dirigé sur la pièce (22) jusqu'à ce qu'il atteigne le support (24) ;
**caractérisé en ce que**
c) au moins un paramètre de travail choisi dans le groupe de paramètres suivant est modifié : diamètre de faisceau, courant de faisceau, focalisation de faisceau, déviation relative du faisceau d'électrons (12) d'un axe d'appareil (18), vitesse du faisceau d'électrons (12) sur la pièce (22), énergie par unité de longueur ;
d) la variation à l'intérieur d'une impulsion de faisceau étant telle que la manière dont l'énergie est fournie varie et que cette variation permet une fusion différente correspondante du matériau de la pièce, de sorte que des alésages avec une paroi d'alésage s'écartant d'une forme cylindrique sont produits.

2. Procédé selon la revendication 1, **caractérisé en ce que** deux ou plusieurs paramètres de travail du groupe de paramètres sont modifiés.

3. Procédé selon la revendication 2, **caractérisé en ce qu'**au moins deux des paramètres de travail modifiés sont modifiés simultanément.

4. Procédé selon la revendication 2 ou 3, **caractérisé en ce qu'**au moins deux des paramètres de travail modifiés sont modifiés successivement.

5. Procédé selon l'une des revendications 1 à 4, **caractérisé en ce que** le temps d'usinage comprend deux ou plusieurs cycles de déplacement du faisceau d'électrons (12) sur la pièce (22), de préférence 2 à 50 cycles de déplacement, davantage de préférence 2 à 20 cycles de déplacement, davantage de préférence 2 à 10 cycles de déplacement.

6. Procédé selon la revendication 5, **caractérisé en ce que**, lors d'un premier parcours de faisceau, la pièce (22) n'est fondue que partiellement sur son épaisseur et la surface du support est atteinte dans un dernier parcours de faisceau, de préférence vers sa fin.

7. Procédé selon la revendication 5 ou 6, **caractérisé en ce que** dans au moins l'un des derniers cycles, de préférence les cinq derniers cycles, le faisceau d'électrons (12) est amené radialement vers l'extérieur sur une distance correspondant à une petite fraction du diamètre de faisceau, de préférence d'environ 2 % à environ 5 % du diamètre de faisceau.

8. Procédé selon l'une des revendications 1 à 7, **caractérisé en ce que** l'alésage (48) est produit par deux, trois, etc. impulsions de faisceau successives.

9. Procédé selon la revendication 8, **caractérisé en ce que** lors de la première impulsion de faisceau, la pièce est fondue jusqu'à une profondeur qui représente au moins environ la moitié, un tiers, etc. de l'épaisseur de la pièce, le support (24) n'étant cependant pas encore atteint, et lors la deuxième, troisième, etc. impulsion de faisceau, la bande de matériau restante est fondue jusqu'au support (24) et les parois de la partie de l'alésage (48) produite par de premières impulsions de faisceau précédentes sont dépassées.

10. Procédé selon la revendication 9 et la revendication 1, **caractérisé en ce que** la deuxième, troisième, etc. impulsion de faisceau diffère de la première impulsion de faisceau par l'un de ses paramètres qui est sélectionné dans ledit groupe de paramètres.

11. Procédé selon la revendication 10, **caractérisé en ce que** la vitesse de déplacement et la trajectoire sur laquelle le faisceau d'électrons (12) est guidé pour l'usinage sont adaptées l'une à l'autre de telle sorte qu'au moins une partie de l'alésage soit balayée deux fois lors de sa production.

12. Procédé selon l'une des revendications 1 à 11, **caractérisé en ce que** la trajectoire du faisceau d'électrons (2) est parcourue par incréments.

13. Procédé selon l'une des revendications 1 à 12, **caractérisé en ce que** le faisceau d'électrons (12) est guidé successivement sur des trajectoires dont la distance dans une direction perpendiculaire à la direction de déplacement du faisceau est plus petite que le diamètre de faisceau, de préférence est de 10 à 40 %, davantage de préférence de 15 à 25 % de celui-ci.

14. Procédé selon l'une des revendications 1 à 13, **caractérisé en ce qu'**après achèvement de l'alésage, le faisceau d'électrons (12) est guidé sur le bord du matériau entourant l'alésage, de préférence avec une énergie réduite de telle sorte que le matériau de la pièce ne soit ni fondu ni vaporisé.
